# EUROPÄISCHE PATENTSCHRIFT

(11) **EP 0 544 998 B1**
(45) Veröffentlichungstag und Bekanntmachung des Hinweises auf die Patenterteilung: **15.05.1996**
(21) Anmeldenummer: 92113385.6
(22) Anmeldetag: 05.08.1992
(51) Int. Cl.: H05B 41/16, H05B 41/26, H05B 41/231

(54) **Schaltungsanordnung zum Starten und Betreiben von Hochdruck-Gasentladungslampen**
Circuit for starting and driving high-pressure electric discharge lamps
Circuit pour faire démarrer et mettre en service des lampes luminescentes à gaz à haute pression

(30) Priorität: 14.08.1991 DE 4126865
(43) Veröffentlichungstag der Anmeldung: 09.06.1993
(73) Patentinhaber: Hella KG Hueck & Co., D-59552 Lippstadt (DE)
(72) Erfinder: Daub, Wolfgang, W-4780 Lippstadt (DE)

(56) Entgegenhaltungen:
- DE-A- 2 615 517
- DE-A- 4 029 206
- US-A- 4 393 335

## Beschreibung

Die Erfindung betrifft eine Schaltungsanordnung zum Starten und Betreiben von Hochdruck-Gasentladungslampen, mit mindestens einem DC/DC-Wandler, der strom- oder leistungsgesteuert ist und aus einer Gleichspannungsquelle gespeist wird, der eine Lampenversorgungsspannung erzeugt und der einen Ladekondensator an seinem Ausgang aufweist, mit einem zusätzlichen Ladekondensator parallel zu dem Ladekondensator und mit einem Zündgerät zur Erzeugung einer Zündspannung in der Verbindung zwischen dem mindestens einen DC/DC-Wandler und der Hochdruck-Gastenladungslampe.

Es ist eine Schaltungsanordnung zum Starten und Betreiben von Hochdruck-Gasentladungslampen bekannt, die einen DC/DC-Wandler aufweist, der leistungsgesteuert ist. Der DC/DC-Wandler wird aus einer Gleichspannungsquelle gespeist. Der DC/DC-Wandler erzeugt dabei aus der Gleichspannung die Lampenversorgungsspannung. Zum Zünden der Hochdruck-Gasentladungslampe ist zwischen der Hochdruck-Gasentladungslampe und dem DC/DC-Wandler ein Zündgerät angeordnet, das die für das Starten der Hochdruck-Gasentladungslampe erforderliche Zündspannung erzeugt. Wie üblich weist der DC/DC-Wandler an seinem Ausgang einen Ladekondensator auf. Handelt es sich bei dem DC/DC-Wandler um einen strom- oder leistungsgesteuerten Wandler, so muß dieser ausgangsseitig dynamisch hochohmig sein, um einen stabilen Lampenbetrieb zu garantieren. Der Ladekondensator des Wandlers darf daher nur eine kleine Kapazität haben.

Unmittelbar nach dem Zünden der Hochdruck-Gasentladungslampe muß der Wandler aber sofort einen großen Strom von mehreren Ampere liefern können, damit eine erfolgreiche Zündübernahme sichergestellt werden kann. Aufgrund der geringen Kapazität des Ladekondensators ist dies häufig nicht möglich. Zu diesem Zweck ist es bekannt, parallel zu dem Ladekondensator einen zusätzlichen Ladekondensator anzuordnen, der bei dem Starten der Hochdruck-Gasentladungslampe durch das Entladen des zusätzlichen Ladekondensators eine sichere Zündübernahme gewährleistet. Der zusätzliche Ladekondensator weist dabei eine große Kapazität auf und ist häufig als Elektrolytkondensator ausgebildet.

Bei der bekannten Ausführungsform erweist sich als nachteilig, daß bei dem stationären Betrieb der Hochdruck-Gasentladungslampe der zusätzliche Ladekondensator aufgrund seiner großen Kapazität den strom- oder leistungsgesteuerten Betrieb der Hochdruck-Gasentladungslampe stört. Hierbei ergeben sich insbesondere Nachteile bei dem Steuerverhalten im stationären Betrieb sowie Kostennachteile dadurch, daß die Schaltungsanordnung und deren Bauteile an die störende Wirkung des zusätzlichen Ladekondensators bei dem stationären Betrieb angepaßt werden müssen.

Der Erfindung liegt die Aufgabe zugrunde, eine Schaltungsanordnung zum Starten und Betreiben von Hochdruck-Gasentladungslampen zu schaffen, bei der auf einfache und kostengünstige Weise mit großer Zuverlässigkeit bei dem stationären Betrieb der Hochdruck-Gasentladungslampe eine negative Beeinflussung durch den zusätzlichen Ladekondensator ausgeschlossen wird.

Die Aufgabe wird erfindungsgemäß dadurch gelöst, daß in Reihe zu dem zusätzlichen Ladekondensator eine Z-Diode angeordnet ist und daß diese Reihenanordnung parallel zu dem Ladekondensator liegt.

Es ist von Vorteil, daß in Reihe zu dem zusätzlichen Ladekondensator eine Z-Diode angeordnet ist und daß diese Reihenanordnung parallel zu dem Ladekondensator liegt, weil somit auf besonders einfache und kostengünstige Weise sichergestellt wird, daß der zusätzliche Ladekondensator vor der Zündung der Hochdruck-Gasentladungslampe auf eine ausreichende Spannung aufgeladen wird, der zusätzliche Ladekondensator bei der Zündung der Hochdruck-Gasentladungslampe mitentladen wird und aufgrund der sperrenden Wirkung der Z-Diode der zusätzliche Ladekondensator bei dem stationären Betrieb der Hochdruck-Gasentladungslampe von der übrigen Schaltungsanordnung abgekoppelt ist und diese nicht beeinflußt. Aufgrund der hohen Zuverlässigkeit der Z-Dioden, die heute Anwendung finden, weist die Schaltungsanordnung eine hohe Sicherheit und Langlebigkeit auf.

Es ist von Vorteil, daß parallel zu dem zusätzlichen Ladekondensator ein hochohmiger Widerstand angeordnet ist, weil somit der Z-Diode als Arbeitswiderstand ein hochohmiger Widerstand zugeordnet wird, der sicherstellt, daß während der Zündung der Hochdruck-Gasentladungslampe der zusätzliche Ladekondensator nur auf die um die Z-Spannung reduzierte Lampenbetriebsspannung (Wandler-Ausgangsspannung) aufgeladen wird, wodurch die Kosten und das Bauvolumen des zusätzlichen Ladekondensators klein gehalten werden können. Der hochohmige Widerstand ist zudem vorteilhaft, da er eine einwandfreie Funktion der Z-Diode in deren Sperrbereich sicherstellt, da die Z-Diode auch im Sperrbereich einen geringen Strom benötigt, wobei vermieden wird, daß der zusätzliche Ladekondensator im Sperrbereich der Z-Diode aufgeladen wird, wodurch negative Beeinflussungen im stationären Betrieb der Hochdruck-Gasentladungslampe durch den zusätzlichen Ladekondensator zuverlässig vermieden werden.

Dadurch, daß in Reihe zu dem zusätzlichen Ladekondensator ein Widerstand angeordnet ist, ergibt sich der Vorteil, daß bei geeigneter Wahl der durch den zusätzlichen Ladekondensator und den Widerstand bestimmten Zeitkonstante bei der Zündung der Hochdruck-Gasentladungslampe der zusätzliche Ladekondensator angepaßt an das Regelvermögen der Schaltung entladen wird, wodurch eine sichere Zündübernahme gewährleistet wird.

Es ist von Vorteil, in der Verbindung zwischen dem DC/DC-Wandler und dem Zündgerät einen Wechselrichter anzuordnen, weil somit auf einfache und kostengünstige Weise ein sicheres und zuverlässiges Starten und Betreiben von Wechselstrom-Hochdruck-Gasentladungslampen an einer Gleichspannungsquelle möglich ist.

Es ist von Vorteil, daß die Schaltungsanordnung Verwendung in Vorschaltgeräten zum Starten und Betreiben von Hochdruck-Gasentladungslampen in Kraftfahrzeugen findet, da insbesondere bei der Verwendung einer solchen Schaltungsanordnung in Kraftfahrzeugen ein zuverlässiges Zünden und ein ungestörter Betrieb der Hochdruck-Gasentladungslampe für ein sicheres Betreiben von Kraftfahrzeugen entscheidend ist.

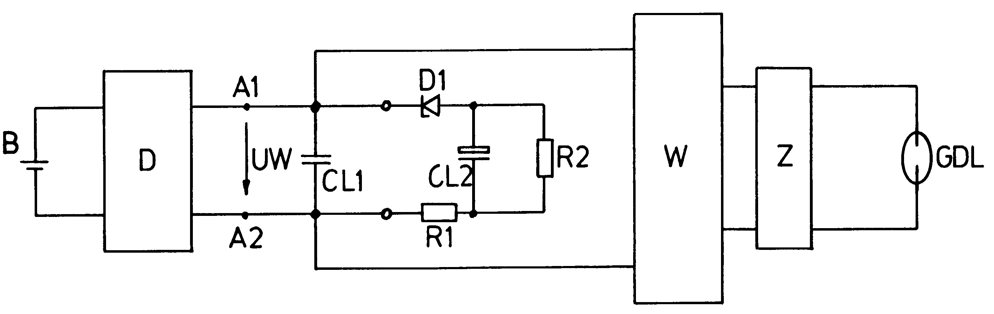

Ein Ausführungsbeispiel der erfindungsgemäßen Schaltungsanordnung zum Starten und Betreiben von Hochdruck-Gasentladungslampen ist in der einzigen Zeichnung dargestellt und wird im folgenden anhand der Zeichnung näher beschrieben.

Die einzige Zeichnung zeigt einen DC/DC-Wandler (D), der aus einer Gleichspannungsquelle (B) gespeist wird. Die Gleichspannungsquelle (B) ist hier beispielhaft die Fahrzeugbatterie eines Kraftfahrzeugs. Der DC/DC-Wandler (D) ist hier beispielhaft Strom- oder leistungsgesteuert ausgelegt. Die Ansteuerung ist in der Zeichnung nicht mit beigefügt. Erfolgt die Leistungsregelung der Hochdruck-Gasentladungslampe (GDL) wie hier beispielhaft über die Steuerung des DC/DC-Wandlers (D), so muß dieser ausgangsseitig dynamisch hochohmig sein, um einen stabilen Lampenbetrieb zu garantieren. Der parallel zu der ersten Ausgangsklemme (A1) und der zweiten Ausgangsklemme (A2) des DC/DC-Wandlers (D) angeordnete Ladekondensator (CL1) des DC/DC-Wandlers (D) darf daher nur eine kleine Kapazität aufweisen. Unmittelbar nach der Zündung der Hochdruck-Gasentladungslampe (GDL) muß der DC/DC-Wandler (D) aber sofort einen großen Strom von mehreren Ampere liefern können, damit eine erfolgreiche Zündübernahme sichergestellt werden kann. Zu diesem Zweck ist dem Ladekondensator (CL1) eine Reihenanordnung, bestehend aus einer Z-Diode (D1), einem zusätzlichen Ladekondensator (CL2) und einem Widerstand (R1), parallel geschaltet. Der zusätzliche Ladekondensator (CL2) weist eine hohe Kapazität auf und ist hier beispielhaft als ein Elektrolytkondensator ausgebildet. Zusammen mit dem Widerstand (R1) bildet der zusätzliche Ladekondensator (CL2) ein RC-Glied, das eine ausreichend große Zeitkonstante aufweist, um bei dem Zünden der Hochdruck-Gasentladungslampe (GDL) eine sichere Zündübernahme zu gewährleisten.

Bei einer anderen Ausführungsform des Erfindungsgegenstands, bei der durch den DC/DC-Wandler (D) eine schnelle Leistungsregelung gegeben ist, kann auf den Widerstand (R1) verzichtet werden. Durch das Mitentladen des zusätzlichen Ladekondensators (CL2) bei der Zündung wird somit eine sichere Zündübernahme gewährleistet.

Parallel zu dem zusätzlichen Ladekondensator (CL2) ist als Arbeitswiderstand für die Z-Diode (D1) ein hochohmiger Widerstand (R2) angeordnet, der sicherstellt, daß während der Zündung der Hochdruck-Gasentladungslampe (GDL) der zusätzliche Ladekondensator (CL2) nur auf die um die Z-Spannung reduzierte Lampenbetriebsspannung d. h. die reduzierte Wandler-Ausgangsspannung (UW) aufgeladen wird. Aufgrund der Sperrwirkung der Z-Diode (D1) wird die Schaltungsanordnung durch die hohe Kapazität des zusätzlichen Ladekondensators (CL2) bei dem stationären Betrieb der Hochdruck-Gasentladungslampe (GDL) nicht negativ beeinflußt, da die Z-Diode (D1) den zusätzlichen Ladekondensator (CL2) aufgrund der auftretenden Spannungen im stationären Betrieb von der übrigen Schaltungsanordnung entkoppelt.

In der Verbindung zwischen der Hochdruck-Gasentladungslampe (GDL) und dem DC/DC-Wandler (D) ist ein Zündgerät (Z) angeordnet, daß die für das Zünden der Hochdruck-Gasentladungslampe (GDL) erforderliche Zündspannung erzeugt. Bei dem hier gezeigten Ausführungsbeispiel ist zwischen dem Zündgerät (Z) und dem DC/DC-Wandler (D) ein Wechselrichter (W) angeordnet, der das Zündgerät (Z) und die Hochdruck-Gasentladungslampe (GDL) mit Spannung versorgt. Bei dem hier gezeigten Ausführungsbeispiel ist die Hochdruck-Gasentladungslampe (GDL) eine Wechselstrom-Hochdruck-Gasentladungslampe (GDL). Bei einem anderen Ausführungsbeispiel, bei der die Hochdruck-Gasentladungslampe (GDL) eine Gleichstrom-Hochdruck-Gasentladungslampe (GDL) ist, kann auf die Zwischenschaltung des Wechselrichters (W) verzichtet werden.

Das Zündgerät kann in bekannter Weise nach dem Resonanzzündprinzip oder dem überlagerungszündprinzip arbeiten.

Im folgenden wird kurz eine Funktionsbeschreibung der erfindungsgemäßen Schaltungsanordnung gegeben.

Unmittelbar vor der Zündung der Hochdruck-Gasentladungslampe (GDL) beträgt die Wandler-Ausgangsspannung (UW) zwischen den Ausgangsklemmen (A1, A2) des DC/DC-Wandlers (D) beispielhaft etwa 320 Volt. Die Z-Diode (D1) hat eine Spannung von beispielhaft etwa 130 Volt, so daß der zusätzliche Ladekondensator (CL2) auf eine Spannung von beispielhaft etwa 190 Volt aufgeladen wird. Unmittelbar nach dem Zünden der Hochdruck-Gasentladungslampe (GDL) bricht die Lampenspannung und damit die Wandlerausgangsspannung (UW) auf beispielhaft etwa 10-15 Volt zusammen. Der zusätzliche Ladekondensator (CL2) entlädt sich nun in die Hochdruck-Gasentladungslampe und gibt somit dem DC/DC-Wandler (D) Zeit, den Anlaufstrom der Hochdruck-Gasentladungslampe (GDL) zu übernehmen. Das Entladen kann, falls erforderlich, über den Widerstand (R1) erfolgen, der zusammen mit dem zusätzlichen Ladekondensator (CL2) die Zeitkonstante für die Entladung bestimmt. Im stationären Betrieb der Hochdruck-Gasentladungslampe (GDL) liegt die Wandler-Ausgangsspannung (UW) beispielhaft etwa zwischen 70 Volt und 110 Volt, so daß die Z-Diode (D1) gesperrt ist und der zusätzliche Ladekondensator (CL2) die Schaltungsanordnung nicht negativ beeinflussen kann. Als Arbeitswiderstand für die Z-Diode (D1) ist parallel zu dem zusätzlichen Ladekondensator (CL2) ein hochohmiger Widerstand (R2) angeordnet. Der hochohmige Widerstand (R2) weist beispielhaft einen Widerstandswert von größer 10 kΩ auf. Bei dem hier gewählten Ausführungsbeispiel liegt der Widerstandswert beispielhaft bei etwa 100-200 kΩ. Der Widerstandswert des Widerstands (R1) liegt bei beispielhaft etwa 20-200Ω. Je nach Ausführungsbeispiel und Anwendung der Schaltungsanordnung können alle genannten Zahlenangaben auch größer oder kleiner gewählt werden.

### Bezugszeichenliste

- (A1): erste Ausgangsklemme
- (A2): zweite Ausgangsklemme
- (B): Gleichspannungsquelle
- (D): DC/DC-Wandler
- (CL1): Ladekondensator
- (CL2): zusätzlicher Ladekondensator
- (D1): Z-Diode
- (GDL): Hochdruck-Gasentladungslampe
- (R1): Widerstand
- (R2): hochohmiger Widerstand
- (UW): Wandler-Ausgangsspannung
- (W): Wechselrichter
- (Z): Zündgerät

## Patentansprüche

1. Schaltungsanordnung zum Starten und Betreiben von Hochdruck-Gasentladungslampen, mit mindestens einem DC/DC-Wandler (D) der strom- oder leistungsgesteuert ist und aus einer Gleichspannungsquelle (B) gespeist wird, der eine Lampenversorgungsspannung erzeugt und der einen Ladekondensator (CL1) an seinem Ausgang aufweist, mit einem zusätzlichen Ladekondensator (CL2) parallel zu dem Ladekondensator (CL1) und mit einem Zündgerät (Z) zur Erzeugung einer Zündspannung in der Verbindung zwischen dem mindestens einen DC/DC-Wandler (D) und der Hochdruck-Gasentladungslampe (GDL), dadurch gekennzeichnet, daß in Reihe zu dem zusätzlichen Ladekondensator (CL2) eine Z-Diode (D1) angeordnet ist, und daß diese Reihenanordnung parallel zu dem Ladekondensator (CL1) liegt.

2. Anordnung nach Anspruch 1, dadurch gekennzeichnet, daß parallel zu dem zusätzlichen Ladekondensator (CL2) ein hochohmiger Widerstand (R2) angeordnet ist.

3. Anordnung nach Anspruch 1 oder Anspruch 2, dadurch gekennzeichnet, daß in Reihe zu dem zusätzlichen Ladekondensator (CL2) ein Widerstand (R1) angeordnet ist.

4. Anordnung nach Anspruch 2 oder Anspruch 3, dadurch gekennzeichnet, daß in der Verbindung zwischen dem DC/DC-Wandler (D) und dem Zündgerät (Z) ein Wechselrichter (W) angeordnet ist.

5. Anordnung nach mindestens einem der vorstehenden Ansprüche, gekennzeichnet durch die Verwendung in Vorschaltgeräten zum Starten und Betreiben von Hochdruck-Gasentladungslampen in Kraftfahrzeugen.

## Claims

1. Switch circuit for starting and operating high-pressure gas-discharge lamps, comprising at least one DC/DC converter (D) which is controlled by current or output and fed from a direct-current source (B), which generates a lamp supply voltage and which has at its output a charging capacitor (CL1), with an additional loading capacitor (CL2) parallel to the loading capacitor (CL1), and with an ignition device (Z) for generating an ignition voltage in the connection between the at least one DC/DC converter (D) and the high-pressure gas-discharge lamp (GDL), **characterized in that** a Z-diode (D1) is arranged in series with the additional loading capacitor (CL2), and that this series arrangement lies parallel to the loading capacitor (CL1).

2. Circuit according to Claim 1, **characterized in that** a high-Ohm resistor (R2) is arranged parallel to the additional loading capacitor (CL2).

3. Circuit according to Claim 1 or Claim 2, **characterized in that** a resistor (R1) is arranged in series to the additional loading capacitor (CL2).

4. Circuit according to Claim 2 or Claim 3, **characterized in that** an alternator (W) is placed in the connection between the DC/DC converter (D) and the ignition device (Z).

5. Circuit according to at least one of the above Claims, **characterized by** the use in add-on devices for starting and operating high-pressure gas-discharge lamps in motor vehicles.

## Revendications

1. Circuit pour démarrer et faire fonctionner des lampes à décharge haute pression, comprenant au moins un convertisseur continu-continu (D) dont le courant ou la puissance est régulé et qui est alimenté à partir d'une source de tension continue (B), qui génère une tension d'alimentation de lampe(s) et présente un condensateur de charge (CL1) à sa sortie, le circuit comprenant en outre un condensateur de charge supplémentaire (CL2) en parallèle avec ledit condensateur de charge (CL1), de même qu'un appareil d'allumage (Z) pour générer une tension d'allumage dans la liaison entre le ou les convertisseurs continu-continu (D) et la lampe à décharge haute pression (GDL), caractérisé en ce qu'une diode de Zener (D1) est montée en série avec le condensateur de charge supplémentaire (CL2) et que ce montage en série est disposé en parallèle avec le condensateur de charge (CL1).

2. Circuit selon la revendication 1, caractérisé en ce qu'une résistance à haute valeur ohmique (R2) est montée en parallèle avec le condensateur de charge supplémentaire (CL2).

3. Circuit selon la revendication 1 ou 2, caractérisé en ce qu'une résistance (R1) est montée en série avec le condensateur de charge supplémentaire (CL2).

4. Circuit selon la revendication 2 ou 3, caractérisé en ce qu'un onduleur (W) est disposé dans la liaison entre le convertisseur continu-continu (D) et l'appareil d'allumage (Z).

5. Circuit selon au moins une des revendications précédentes, caractérisé par son emploi dans des ballasts pour démarrer et faire fonctionner des lampes à décharge haute pression dans des véhicules automobiles.
